# EUROPEAN PATENT APPLICATION

(11) **EP 4 603 313 A1**
(43) Date of publication of application: **20.08.2025**
(21) Application number: 24158146.1
(22) Date of filing: 16.02.2024
(51) Int. Cl.: B60K 1/04, B60K 15/07

(54) **A BRACKET FOR SUPPORTING A BATTERY AND A GAS TANK**

(71) Applicant: VOLVO TRUCK CORPORATION, 405 08 Göteborg (SE)
(72) Inventor: LANDVIK, Sondre, 417 61 GÖTEBORG (SE)
(74) Representative: Kransell & Wennborg KB

(57) **Abstract**

The present disclosure relates to a bracket for supporting a high voltage traction battery and a gas tank of a vehicle, the bracket comprising a frame attachment portion comprising a frame supporting surface configured to be connected to a frame of the vehicle, a battery connecting portion comprising a battery interface surface configured to be connected to, and support, the high voltage traction battery, and a gas tank supporting portion extending from the frame attachment portion to the battery connecting portion, the gas tank supporting portion comprising a gas tank supporting surface configured to support the gas tank, wherein the gas tank supporting surface is arranged on an opposite side of the bracket compared to the frame supporting surface and the battery interface surface, the gas tank supporting surface being shaped to at least partly enclose the gas tank.

## Description

### TECHNICAL FIELD

The disclosure relates generally to support of energy storage systems. In particular aspects, the disclosure relates to a bracket for supporting a battery and a gas tank of a vehicle. The disclosure can be applied to heavy-duty vehicles, such as trucks, buses, and construction equipment, among other vehicle types. Although the disclosure may be described with respect to a particular vehicle, the disclosure is not restricted to any particular vehicle.

### BACKGROUND

The propulsion systems of vehicles are continuously developed to meet the demands from the market. A particular aspect relates to the emission of environmentally harmful exhaust gas. Therefore, vehicles propelled by electric machines have been increasingly popular, both for cars as well as for trucks and other heavy duty vehicles.

In relation to heavy duty vehicles, fuel cell systems are increasingly popular for generating electric power to the electric machines. The electric power generated by the fuel cell system is either supplied to a vehicle battery, or directly provided to the electric machine. The fuel cell system receives a fuel e.g. hydrogen to be able to generate the electric power. The fuel is contained in gas tanks connected to the vehicle. The gas tanks and batteries can be referred to as the energy storage system.

In order to cover a long driving range without having to frequently re-fuel the tanks or charge the batteries, the energy storage systems are relatively large. There is however limited space at the vehicle for positioning of such large energy storage systems, in particular with regards to the gas tanks which are conventionally of cylindrical cross-section and thus rather bulky. There is thus a desire to improve packaging of the combined battery and gas tanks to the vehicle frame, as well as to improve serviceability and assembling of these components to the vehicle frame.

### SUMMARY

According to a first aspect of the disclosure, there is provided a bracket for supporting a high voltage traction battery and a gas tank of a vehicle, the bracket comprising a frame attachment portion comprising a frame supporting surface configured to be connected to a frame of the vehicle, a battery connecting portion comprising a battery interface surface configured to be connected to, and support, the high voltage traction battery, and a gas tank supporting portion extending from the frame attachment portion to the battery connecting portion, the gas tank supporting portion comprising a gas tank supporting surface configured to support the gas tank, wherein the gas tank supporting surface is arranged on an opposite side of the bracket compared to the frame supporting surface and the battery interface surface, the gas tank supporting surface being shaped to at least partly enclose the gas tank.

The first aspect of the disclosure may seek to at least partly mitigate the problem of fitting both batteries as well as gas tanks to the frame of the vehicle. A technical benefit may include that the bracket enables for a less bulky connection of a battery and a gas tank to the vehicle frame. The bracket also enables for simplified individual assembly and removal of the battery and the gas tank to/from the frame of the vehicle. In detail, the serviceability of the battery and the gas tank may be simplified when using the above described bracket since the separate battery interface surface and the gas tank supporting surface may improve serviceability as the battery can be removed from the bracket without any interaction with the gas tank. In a similar vein, the gas tank can be removed from the bracket without any interaction with the battery. Further, by arranging the battery interface surface and the gas tank supporting surface on opposite sides of the bracket, the battery can be connected to the bracket between two gas tanks, whereby the battery is positioned below the frame of the vehicle thereby protecting the battery from damage during operation of the vehicle.

The battery interface surface should be construed as a surface that is either directly connectable to the high voltage traction battery, or indirectly connected to the high voltage traction battery. The battery interface surface may hence be indirectly connectable to the high voltage traction battery by means of an arrangement as will be described in further detail below. In a similar vein, the frame supporting surface may be directly connectable to the frame of the vehicle or indirectly connectable to the frame of the vehicle. For example, a sealing element or a damping element, etc. may be arranged between the frame supporting surface and the frame. The same applies also for the gas tank supporting surface. In particular, the gas tank supporting surface may be directly connectable to the gas tank, or indirectly connectable to the gas tank, such as via a sealing element or a damping element, etc.

Optionally in some examples, including in at least one preferred example, the gas tank supporting surface is formed in a concave shape. A technical benefit may include that the concave shape can be suitably shaped to correspond to a circular cross-sectional shape of a gas tank. The concave shape may be semi-circular, such as e.g. arranged as a C-shaped.

Optionally in some examples, including in at least one preferred example, the bracket further comprises a first aperture arranged at the frame attachment portion and a second aperture arranged at the battery connecting portion, the first and second apertures being configured to receive a strap, wherein the strap, together with the gas tank supporting surface, is configured to fully enclose the gas tank. A technical benefit may include that an interface to the strap is received whereby the gas tank can be securely supported by the bracket.

Optionally in some examples, including in at least one preferred example, the frame supporting surface faces in a first direction, and wherein the battery interface surface faces in a second direction, the first and second directions being perpendicular to each other. The battery surface is preferably arranged below the frame supporting surface when the bracket is connected to the frame of the vehicle.

Optionally in some examples, including in at least one preferred example, the battery interface surface comprises a battery attachment portion to which an arrangement is configured to be attached such that the high voltage traction battery is connected to the battery interface surface via the arrangement. As indicated above, the battery interface surface is indirectly connectable to the battery.

Optionally in some examples, including in at least one preferred example, a first portion of the gas tank supporting portion and the frame attachment portion are formed in one piece and made from the same material. A technical benefit may include that a simple and cost efficient portion of the bracket can be achieved. In addition, the structural strength may also be improved since no intermediate portions are present, which intermediate portions could otherwise be exposed to wear and tear in there interface surfaces.

Optionally in some examples, including in at least one preferred example, a second portion of the gas tank supporting portion and the battery supporting portion are formed in one piece and made from the same material. A technical benefit may include that a simple and cost efficient portion of the bracket can be achieved. In addition, the structural strength may also be improved since no intermediate portions are present, which intermediate portions could otherwise be exposed to wear and tear in there interface surfaces.

Optionally in some examples, including in at least one preferred example, the frame attachment portion and the battery supporting portion are separate parts attached to each other. A technical benefit may include, as will also be evident from the below description, that a simplified attachment of the battery and gas tank to the frame may be obtained. In detail, the frame attachment portion may be attached to the frame and the battery supporting may be attached to the battery. Thereafter, the battery attachment portion and the frame attachment portion can be attached to each other to thereby connect the battery to the frame, via the bracket. The gas tank can subsequently be connected to the gas tank supporting portion.

Optionally in some examples, including in at least one preferred example, the frame attachment portion and the battery supporting portion are attached to each other by at least one screw or bolt.

Optionally in some examples, including in at least one preferred example, the frame attachment portion comprises a first abutment surface, and the battery supporting portion comprises a second abutment surface, wherein the frame attachment portion and the battery supporting portion are attached to each other by arranging the first and second abutment surfaces in abutment with each other.

Optionally in some examples, including in at least one preferred example, the first abutment surface is perpendicular to the frame supporting surface. A technical benefit may include that the battery supporting portion can be fixated to the frame attachment portion in a substantially vertical direction when the frame attachment portion is connected to the frame of the vehicle.

Optionally in some examples, including in at least one preferred example, the first abutment surface is parallel with the frame supporting surface. A technical benefit may include that the battery supporting portion can be fixated to the frame attachment portion in a substantially horizontal direction when the frame attachment portion is connected to the frame of the vehicle.

According to a second aspect, there is provide a bracket arrangement, comprising a bracket according to any one of the examples described above in relation to the first aspect, and a battery bracket directly connectable to the high voltage traction battery, the battery bracket being connected to the battery interface surface.

Optionally in some examples, including in at least one preferred example, the bracket arrangement further comprises an arrangement connected between the battery bracket and the battery interface surface.

Optionally in some examples, including in at least one preferred example, the arrangement comprises a housing directly connected to the battery interface surface, and a bushing accommodated in the housing. A technical benefit of the housing may include that an interface to the battery bracket can be provided which can simplify assembly and disassembly of the high voltage traction battery to/from the bracket. The high voltage traction battery can thus be disconnected from the bracket without having to remove the gas tank. Also, during assembly, the high voltage traction battery, together with the tank bracket and the housing can be docked to the bracket, which bracket in such situation can be pre-installed to the frame.

Optionally in some examples, including in at least one preferred example, the bushing is connected to the battery bracket. A technical benefit may include that the bushing can protect the high voltage traction battery from frame motions, such as e.g. frame twisting. Thus, when the frame moves during operation of the vehicle, the bushing can dampen these motions to reduce forces transmitted to the high voltage traction battery.

Further effects and features of the second aspect are largely analogous to those described above in relation to the first aspect.

According to a third aspect, there is provided an energy storage arrangement, comprising a bracket according to any one of the above described examples in relation to the first aspect, a high voltage traction battery connected to the battery interface surface, and a gas tank connected to the gas tank supporting surface.

Effects and features of the third aspect are largely analogous to those described above in relation to the first and second aspects.

According to a fourth aspect, there is provided a vehicle, comprising a bracket according to any one of the examples described above in relation to the first aspect, or a bracket arrangement according to any one the examples described above in relation to the second aspect, or an energy storage arrangement according to the third aspect.

Effects and features of the fourth aspect are largely analogous to those described above in relation to the first and second aspects.

According to a fifth aspect, there is provided a method of assembling an energy storage arrangement to a frame of a vehicle, the method comprising: connecting a frame supporting surface of a frame attachment portion of a bracket to the frame of the vehicle, connecting a battery interface surface of a battery connecting portion of the bracket to a high voltage traction battery, connecting the frame attachment portion and the battery connecting portion to each other, and connecting a gas tank to a gas tank supporting surface of a gas tank supporting portion of the bracket.

As indicated above, a technical benefit of the fifth aspect may include that assembling of the battery as well as the gas tank to the frame of the vehicle may be substantially simplified. In particular, by means of the method, the battery connecting portion may be separately connected to the battery and the and the frame attachment portion may be separately connected to the frame. Thereafter, the battery connecting portion and the frame attachment portion are connected to each other. The gas tank supporting surface is formed by the attachment of the battery connecting portion and the frame attachment portion, whereby the gas tank can be connected to the gas tank supporting portion when the battery connecting portion and the frame attachment portion are connected to each other.

Further effects and features of the fifth aspect are largely analogous to those described above in relation to the first and second aspects.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

### BRIEF DESCRIPTION OF THE DRAWINGS

Examples are described in more detail below with reference to the appended drawings.
Fig. 1 is an exemplary illustration of a vehicle according to an example,
Fig. 2 is an exemplary illustration of a bracket according to an example,
Fig. 3 is an exemplary illustration of a bracket according to another example, as well as a bracket arrangement according to an example, and
Fig. 4 is an exemplary flow chart of a method of assembling an energy storage arrangement to a frame of the vehicle according to an example.

### DETAILED DESCRIPTION

The detailed description set forth below provides information and examples of the disclosed technology with sufficient detail to enable those skilled in the art to practice the disclosure.

The following disclosure aims at providing a bracket that at least partly mitigates the problem of fitting both batteries as well as gas tanks to the frame of the vehicle. The disclosure also aims at enabling for a simplified assembling as well as de-assembling of batteries and gas tanks to/from the frame of the vehicle.

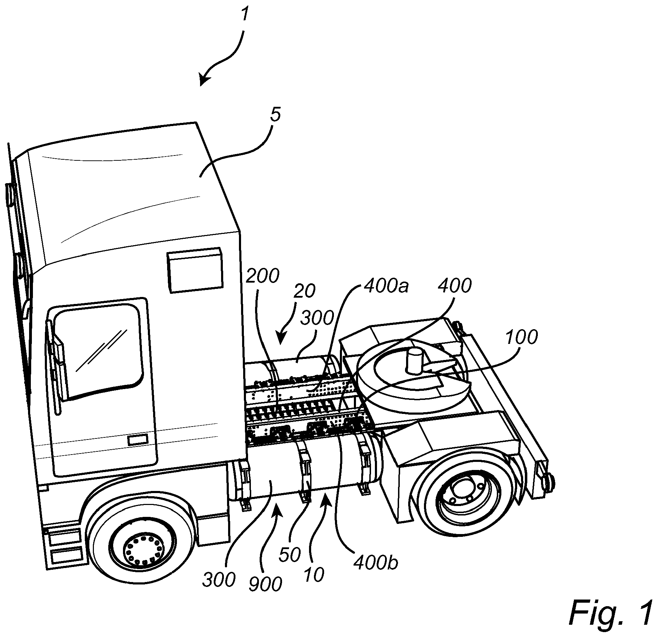

Turning to Fig. 1 which is an exemplary illustration of a vehicle 1. In particular, Fig. 1 is a perspective view of a vehicle 1 in the form of a truck. The vehicle comprises a cab 5 in which a driver controls operation of the vehicle. The vehicle is preferably propelled by means of one or more electric traction motors, preferably in the form of electric motors which receives electric power from one or more batteries or one or more fuel cells. The following will describe the vehicle 1 the form of a fuel cell truck which comprises one or more hydrogen tanks arranged to contain hydrogen for operating the fuel cell(s). The vehicle may also, in addition or as an alternative, comprise one or more vehicle batteries.

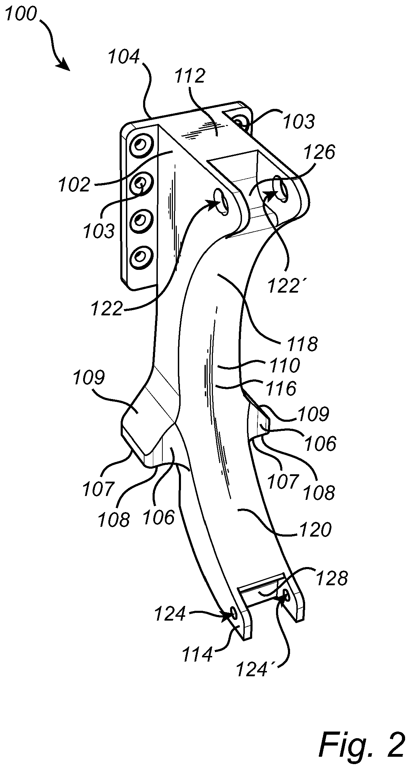

As is further illustrated in Fig. 1, the vehicle 1 comprises a chassis arrangement 900, wherein the chassis arrangement comprises a frame 400 comprising a first frame portion 400a, and a second frame portion 400b. In the following, the first and second frame portions may also be referred to as a pair of longitudinally extending frame rails 400a, 400b. The chassis arrangement further comprises a suspension arrangement 10 comprising brackets (shown in further detail in Figs. 2-4) connected to the pair of longitudinally extending frame rails 404a, 404b. The suspension arrangement 10 is suspending an energy storage arrangement 20. The energy storage arrangement 20 comprises a high-voltage traction battery 200 and a gas tank 300 arranged laterally of each of the respective on a respective longitudinally extending frame rails 400a, 400b.

In order to describe the bracket in further detail, reference is made to Fig. 2 which is an exemplary illustration of the bracket 100 according to an example. The exemplified bracket 100 comprises a frame attachment portion 102. The frame attachment portion 102 comprises a frame supporting surface 104. The frame supporting surface 104 is configured to be connected to the frame 400 of the vehicle 1. Thus, the frame attachment portion 102 is connectable to the frame 400 of the vehicle 1, preferably by attaching the frame attachment portion 102 to the frame 400 using bolts or screws (not shown) through a plurality of holes 103 in the frame attachment portion 102.

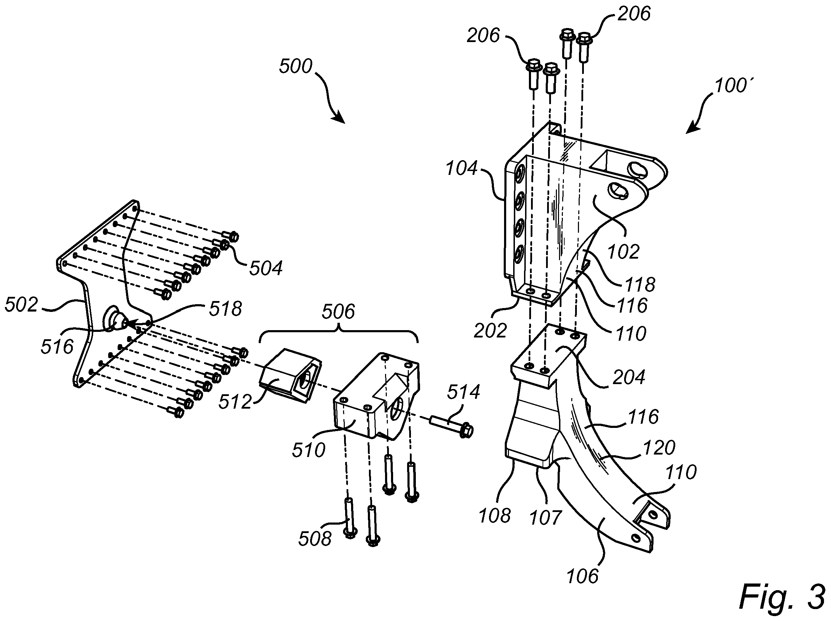

Further, the bracket 100 also comprises a battery connecting portion 106. The battery connecting portion 106 is arranged to suspend the high voltage traction battery (200 in Fig. 1). In particular, the battery connecting portion 106 comprises a battery interface surface 108 to which the high voltage traction battery is directly or indirectly connected. Hence, the battery interface surface 108 is configured to suspend the high voltage traction battery. The battery interface surface 108 comprises a battery attachment portion 107 to which an arrangement (described in further detail below with reference to Fig. 3) is configured to be attached such that the high voltage traction battery is connected to the battery interface surface via the arrangement. The battery interface surface 108 is arranged on a pair of wing-shaped protruding portions 109. Thus, the battery connecting portion 106 comprises two wing-shaped protruding portions 109, and as such two battery interface surface 108. The wing-shaped protruding portions 109 protrudes in at least a direction perpendicular to an elongation between the frame attachment portion 102 to the battery connecting portion 106 of the bracket 100.

Furthermore, and as will be evident from the below disclosure in relation to Fig. 3, the high voltage traction battery may be connected to the battery interface surface 108 via a bushing and a bushing housing. The high voltage traction battery may be connected, directly or indirectly, to the battery interface surface 108 via non-illustrated bolts or screws.

In the exemplified bracket 100 depicted in Fig. 2, the frame supporting surface 104 and the battery interface surface 108 face in substantially perpendicular direction. In further detail, when the bracket 100 is attached to the frame, the frame supporting surface 104 faces in a first direction, i.e. towards the frame of the vehicle, while the battery interface surface 108 faces in a second direction, i.e. towards a ground surface.

The bracket 100 further comprises a gas tank supporting portion 110. The gas tank supporting portion 110 extends from the frame attachment portion 102 to the battery connecting portion 106. In particular, the gas tank supporting portion 110 extends from an upper end 112 of the bracket 100 to a lower end 114 of the bracket 100. Accordingly, the bracket 100 is elongated whereby the upper end 112 forms part of the frame attachment portion 102, while the lower end 114 forms part of the battery connecting portion 106. Further, the gas tank supporting portion 110 comprises a gas tank supporting surface 116. The gas tank supporting surface 116 is configured to support the gas tank depicted in Fig. 1. As can be seen in Fig. 2, the gas tank supporting surface 116 is formed in a concave shape and the gas tank in Fig. 1 is arranged to be in abutment with this concaved shaped surface. The concave shape can also be considered a semi-circular shape. The concave shape of the gas tank supporting surface 116 may preferably correspond to a convex shape of the gas tank to enable for abutment between the gas tank supporting surface 116 and a surface of the gas tank along the entire gas tank supporting surface 116. As can also be seen in Fig. 2, the gas tank supporting surface 116 is arranged on opposite side of the bracket 100 compared to the frame attachment surface 104 and the battery interface surface 108. As such, the gas tank supporting surface 116 will face away from the frame of the vehicle when the bracket 100 is connected to the frame.

The exemplified bracket 100 in Fig. 2 is formed in one piece and made from the same material. As such, a first portion 118 of the gas tank supporting portion 110 and the frame attachment portion 106 are formed in one piece and made from the same material, and a second portion 120 of the gas tank supporting portion 110 and the battery supporting portion 106 are formed in one piece and made from the same material. In the example in Fig. 2, the first 118 and second 120 portions are as also formed in one piece and made from the same material.

Moreover, the bracket 100 also comprises a first aperture 122, 122' at the frame attachment portion 102, and a second aperture 124, 124' at the battery connecting portion 106. The first aperture 122, 122' is preferably a pair of first apertures 122, 122' arranged as respective through holes in the frame attachment portion 102. In a similar vein, the second aperture 124, 124' is preferably a pair of second apertures 124, 124' arranged as respective through holes in the battery connecting portion 106. The first 122, 122' and second 124, 124' apertures are configured to receive a strap, which is strap is indicated with reference numeral 50 in Fig. 1. The strap 50, together with the gas tank supporting surface 116 is arranged to fully enclose the gas tank. The gas tank is thus preferably connected to the gas tank supporting surface 116 by using the strap 50 connected to the first and second apertures. The strap 50 preferably comprises a pair of connector elements (not shown), wherein a first connector element is connected to the first aperture 122, 122' and a second connector element is connected to the second aperture 124, 124'. In particular, the first connector element is arranged in a first recess portion 126 of the frame attachment portion 102, which first recess portion 126 is arranged between the pair of first apertures 122, 122'. In a similar vein, the second connector element is arranged in a second recess portion 128 of the battery connecting portion 106, which second recess portion 128 is arranged between the pair of second apertures 124, 124'.

Reference is made to Fig. 3 which is an exemplary illustration of the bracket 100' according to another example. The following will primarily describe the differences between the bracket 100' in Fig. 3 and the bracket 100 described above in relation to Fig. 2. As such, features described above in relation to the description of Fig. 2 should be construed as included for the example in Fig. 3 unless specified otherwise.

Contrary to the bracket 100 depicted in Fig. 2 and described above, the bracket 100' in Fig. 3 is arranged as a two-part bracket. In particular, the frame attachment portion 102 and the battery connecting portion 106 are arranged as separate parts. The gas tank supporting portion is formed by the above described first 118 and second 120 portions, where the first portion 118 of the gas tank supporting portion 110 and the frame attachment portion 102 are formed in one piece and made from the same material, while the second portion 120 of the gas tank supporting portion 110 and the battery connecting portion 106 are formed in one piece and made from the same material. The first 118 and second 120 portions may be formed by the same material but are hence not formed in one piece. On the contrary, the frame attachment portion 102 and the battery connecting portion 106 are attached to each other by a connector element, preferably by screws 206 or bolts, also referred to as bracket screws 206.

As can be seen in Fig. 3, the frame attachment portion 102 comprises a first abutment surface 202, and the battery supporting portion comprises a second abutment surface 204. The frame attachment portion 102 and the battery supporting portion 106 are hereby attached to each other by arranging the first 202 and second 204 abutment surfaces in abutment with each other, and thereafter fixating the parts to each other by the bracket screws 206. In the example depicted in Fig. 3, the first 202 and second 204 abutment surface are perpendicular to the frame supporting surface 104. The bracket screws are thus fixating the parts to each other in a vertical manner. It should however be readily understood that the first 202 and second 204 abutment surface may be parallel with the frame supporting surface 104. In such example, the bracket screws fixate the parts to each other in a horizontal manner.

Fig. 3 also illustrates a bracket arrangement 500 in an exploded view. The bracket arrangement comprises the above described bracket 100'. Although not illustrated in the drawings, the bracket arrangement 500 may equally as well comprise the bracket 100 depicted in Fig. 2.

The bracket arrangement 500 comprises, in addition to the bracket 100', a battery bracket 502. The battery bracket 502 is directly connected, or attached, to the high voltage traction battery depicted in Fig. 1. In particular, the battery bracket 502 may be connected to the high voltage traction battery by one or more battery screws 504 or battery bolts. The battery bracket 502 is in turn connected to the battery interface surface 108. In particular, the bracket arrangement 500 comprises an arrangement 506 connected between the battery interface surface 108 and the battery bracket 502. The arrangement 506 is attached to the above described battery attachment portion 107 of the battery interface surface 108, preferably by one or more screws 508 or bolts, also referred to as bushing housing screws 508. Hence, the high voltage traction battery is hereby connected to the battery interface surface 108 via the arrangement 506.

Furthermore, the arrangement 506 comprises a housing 510 which is directly connected or attached to the battery interface surface 108 by means the bushing housing screws 508. The arrangement 506 also comprises a bushing 512 accommodated in the housing 510. The bushing 512 as well as an opening (not shown) in the housing 510 are preferably designed to prevent rotation of the bushing 512 within the housing 510. The bushing 512 may advantageously comprise a triangular cross-section. The opening in the housing 510 preferably also comprises a triangular shape with similar dimensions as the triangular shape of the bushing 512.

Referring again to the battery bracket 502, which comprises a protruding pin 516. The protruding pin 516 comprises an aperture 518, which is preferably provided with internal threads. The arrangement 506 is connected to the protruding pin 516, and as such to the battery bracket 502, by a bushing screw 514. In detail, the bushing screw 514 is guided through the housing 510 and the bushing 512 and connected to the internal threads in the aperture 518 of the protruding pin 516.

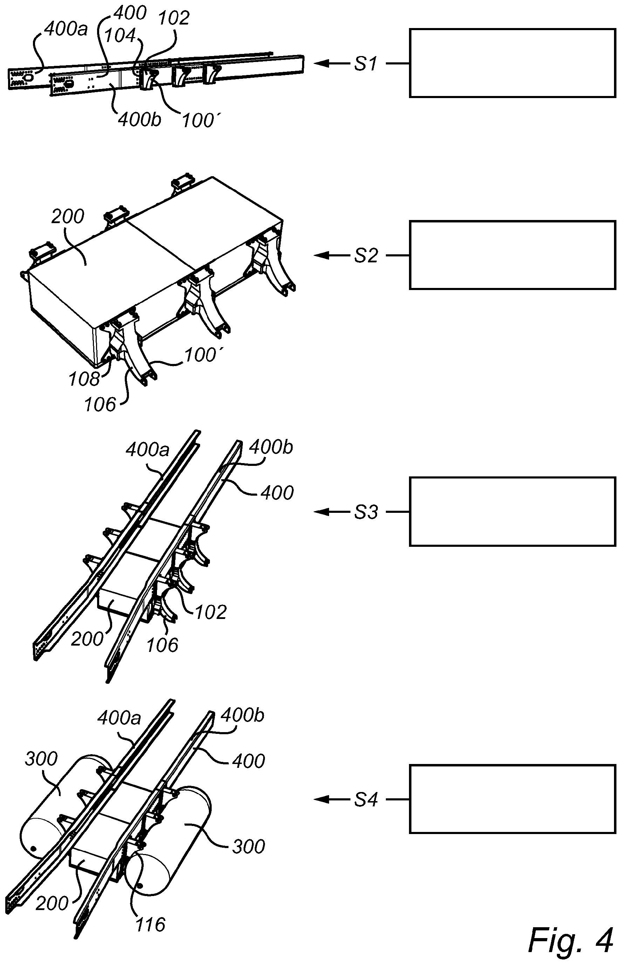

Reference is now made to Fig. 4 for the purpose of describing a method of assembling the energy storage arrangement described above in relation to Fig. 1 to the frame of the vehicle. The illustration in Fig. 4 is related to the bracket 100' in Fig. 3 but a description will also follow for the method of assembling the energy storage arrangement t the frame using the bracket 100 depicted in Fig. 2.

As an initial stage, the frame supporting portion 102 of the bracket 100' is connected S 1 to the frame 400 of the vehicle. In particular, the frame supporting surface 104 of the frame supporting portion 102 is connected S1 to the frame 104. The initial stage also comprises the step of connecting S2 the battery connecting portion 106 of the bracket 100' to the high voltage traction battery 200. In particular, the above described battery interface surface 108 of the battery connecting portion 106 is connected S2 to the high voltage traction battery 200.

The frame attachment portion 102 and the battery connecting portion 106 are subsequently connected S3 to each other. Hereby, the high voltage traction battery 200 is suspended to the frame 400 of the vehicle. The battery connecting portion 106 may be connected to the frame attachment portion 102 by lifting the high voltage traction battery, including the attached battery connecting portion 106, in a vertical direction until the above described first and second abutment surfaces are in abutment with each other.

When the bracket 100' as well as the high voltage traction battery 400 is suspended to the frame 400, the gas tank 300 is connected S4 to the gas tank supporting surface 116 of the gas tank supporting portion 110 of the bracket 100'. Although not illustrated, the gas tank 300 is preferably fixated to the gas tank supporting portion 110 by using the above described straps. Hereby, the high voltage traction battery 200 as well as the gas tank 300 are suspended to the frame 400 of the vehicle.

When using the bracket 100 depicted in Fig. 2, the bracket 100 is in the initial stage connected to either the frame 400 of the vehicle or to the high voltage traction battery 200. The above described battery bracket 502 and the arrangement 506 are connected to the high voltage traction battery 200.

When the bracket 100 is connected to the frame 400 at the initial stage, the high voltage traction battery, including the battery bracket 502 and the arrangement 506 are lifted until the housing 510 abuts the battery interface surface 108, whereafter the bushing housing screws 508 connects the high voltage traction battery to the bracket 100, and thus to the frame 400.

On the other hand, when the bracket 100 is connected to the high voltage traction battery 200 at the initial stage, the bracket 100 as well as the high voltage traction battery 200 are lifted to a position where the frame supporting portion 104 of the bracket 100 can be connected to the frame 400 via the screws arranged through the plurality of holes 103 in the frame attachment portion 102.

Subsequently, for both these scenarios, the gas tank 300 is connected to the gas tank supporting surface 116 of the gas tank supporting portion 110 of the bracket 100 in a similar vein as described above.

### EXAMPLE LIST

Example 1. A bracket for supporting a high voltage traction battery and a gas tank of a vehicle, the bracket comprising: a frame attachment portion comprising a frame supporting surface configured to be connected to a frame of the vehicle, a battery connecting portion comprising a battery interface surface configured to be connected to, and support, the high voltage traction battery, and a gas tank supporting portion extending from the frame attachment portion to the battery connecting portion, the gas tank supporting portion comprising a gas tank supporting surface configured to support the gas tank, wherein the gas tank supporting surface is arranged on an opposite side of the bracket compared to the frame supporting surface and the battery interface surface, the gas tank supporting surface being shaped to at least partly enclose the gas tank.

Example 2. The bracket according to example 1, wherein the gas tank supporting surface is formed in a concave shape.

Example 3. The bracket according to any one of examples 1 or 2, wherein the bracket further comprises a first aperture arranged at the frame attachment portion and a second aperture arranged at the battery connecting portion, the first and second apertures being configured to receive a strap, wherein the strap, together with the gas tank supporting surface, is configured to fully enclose the gas tank.

Example 4. The bracket according to any one of the preceding examples, wherein the frame supporting surface faces in a first direction, and wherein the battery interface surface faces in a second direction, the first and second directions being perpendicular to each other.

Example 5. The bracket according to example 4, wherein the battery interface surface comprises a battery attachment portion to which an arrangement is configured to be attached such that the high voltage traction battery is connected to the battery interface surface via the arrangement.

Example 6. The bracket according to any one of the preceding examples, wherein a first portion of the gas tank supporting portion and the frame attachment portion are formed in one piece and made from the same material.

Example 7. The bracket according to any one of the preceding examples, wherein a second portion of the gas tank supporting portion and the battery supporting portion are formed in one piece and made from the same material.

Example 8. The bracket according to any one of the preceding examples, wherein the frame attachment portion and the battery supporting portion are separate parts attached to each other.

Example 9. The bracket according to example 8, wherein the frame attachment portion and the battery supporting portion are attached to each other by at least one screw or bolt.

Example 10. The bracket according to any one of examples 8 or 9, wherein the frame attachment portion comprises a first abutment surface, and the battery supporting portion comprises a second abutment surface, wherein the frame attachment portion and the battery supporting portion are attached to each other by arranging the first and second abutment surfaces in abutment with each other.

Example 11. The bracket according to example 10, wherein the first abutment surface is perpendicular to the frame supporting surface.

Example 12. The bracket according to example 10, wherein the first abutment surface is parallel with the frame supporting surface.

Example 13. A bracket arrangement, comprising a bracket according to any one of the preceding examples, and a battery bracket directly connectable to the high voltage traction battery, the battery bracket being connected to the battery interface surface.

Example 14. The bracket arrangement according to example 13, further comprising an arrangement connected between the battery bracket and the battery interface surface.

Example 15. The bracket arrangement of example 14, wherein the arrangement comprises a housing directly connected to the battery interface surface, and a bushing accommodated in the housing.

Example 16. The bracket arrangement of example 15, wherein the bushing is connected to the battery bracket.

Example 17. An energy storage arrangement, comprising: a bracket according to any one of examples 1 - 12, a high voltage traction battery connected to the battery interface surface, and a gas tank connected to the gas tank supporting surface.

Example 18. A vehicle, comprising a bracket according to any one of examples 1 - 12, or a bracket arrangement according to any one of examples 13 - 16, or an energy storage arrangement according to example 17.

Example 19. A method of assembling an energy storage arrangement to a frame of a vehicle, the method comprising: connecting a frame supporting surface of a frame attachment portion of a bracket to the frame of the vehicle, connecting a battery interface surface of a battery connecting portion of the bracket to a high voltage traction battery, connecting the frame attachment portion and the battery connecting portion to each other, and connecting a gas tank to a gas tank supporting surface of a gas tank supporting portion of the bracket.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A bracket (100, 100') for supporting a high voltage traction battery (200) and a gas tank (300) of a vehicle, the bracket comprising:
- a frame attachment portion (102) comprising a frame supporting surface (104) configured to be connected to a frame (400) of the vehicle,
- a battery connecting portion (106) comprising a battery interface surface (108) configured to be connected to, and support, the high voltage traction battery (200), and
- a gas tank supporting portion (110) extending from the frame attachment portion (102) to the battery connecting portion (106), the gas tank supporting portion (110) comprising a gas tank supporting surface (116) configured to support the gas tank (300), wherein the gas tank supporting surface (116) is arranged on an opposite side of the bracket (100, 100') compared to the frame supporting surface (104) and the battery interface surface (108), the gas tank supporting surface being shaped to at least partly enclose the gas tank (300).

2. The bracket according to claim 1, wherein the gas tank supporting surface is formed in a concave shape.

3. The bracket according to any one of claims 1 or 2, wherein the bracket further comprises a first aperture arranged at the frame attachment portion and a second aperture arranged at the battery connecting portion, the first and second apertures being configured to receive a strap, wherein the strap, together with the gas tank supporting surface, is configured to fully enclose the gas tank.

4. The bracket according to any one of the preceding claims, wherein the frame supporting surface faces in a first direction, and wherein the battery interface surface faces in a second direction, the first and second directions being perpendicular to each other.

5. The bracket according to claim 4, wherein the battery interface surface comprises a battery attachment portion to which an arrangement is configured to be attached such that the high voltage traction battery is connected to the battery interface surface via the arrangement.

6. The bracket according to any one of the preceding claims, wherein a first portion of the gas tank supporting portion and the frame attachment portion are formed in one piece and made from the same material, and wherein a second portion of the gas tank supporting portion and the battery supporting portion are formed in one piece and made from the same material.

7. The bracket according to any one of the preceding claims, wherein the frame attachment portion and the battery supporting portion are separate parts attached to each other.

8. The bracket according to claim 7, wherein the frame attachment portion comprises a first abutment surface, and the battery supporting portion comprises a second abutment surface, wherein the frame attachment portion and the battery supporting portion are attached to each other by arranging the first and second abutment surfaces in abutment with each other.

9. The bracket according to claim 8, wherein the first abutment surface is perpendicular to the frame supporting surface.

10. A bracket arrangement, comprising a bracket according to any one of the preceding claims, and a battery bracket directly connectable to the high voltage traction battery, the battery bracket being connected to the battery interface surface.

11. The bracket arrangement according to claim 10, further comprising an arrangement connected between the battery bracket and the battery interface surface.

12. The bracket arrangement of claim 11, wherein the arrangement comprises a housing directly connected to the battery interface surface, and a bushing accommodated in the housing.

13. An energy storage arrangement, comprising:
- a bracket according to any one of claims 1-9,
- a high voltage traction battery connected to the battery interface surface, and
- a gas tank connected to the gas tank supporting surface.

14. A vehicle, comprising a bracket according to any one of claims 1 - 9, or a bracket arrangement according to any one of claims 10 - 12, or an energy storage arrangement according to claim 13.

15. A method of assembling an energy storage arrangement to a frame of a vehicle, the method comprising:
- connecting a frame supporting surface of a frame attachment portion of a bracket to the frame of the vehicle,
- connecting a battery interface surface of a battery connecting portion of the bracket to a high voltage traction battery,
- connecting the frame attachment portion and the battery connecting portion to each other, and
- connecting a gas tank to a gas tank supporting surface of a gas tank supporting portion of the bracket.
